# EUROPEAN PATENT SPECIFICATION

(11) **EP 1 547 466 B1**
(45) Date of publication and mention of the grant of the patent: **04.04.2007**
(21) Application number: 04257740.3
(22) Date of filing: 13.12.2004
(51) Int. Cl.: A01N 27/00, A01N 25/32, A01N 3/00, A23B 7/152, A01G 7/06

(54) **A method to reverse ethylene inhibitor responses in plants**
Verfahren zur Umkehrung der Antwort von Pflanzen auf einen Ethyleninhibitor
Procédé pour inverser les réponses des plantes aux inhibiteurs de l'éthylene

(30) Priority: 23.12.2003 US 531870
(43) Date of publication of application: 29.06.2005
(73) Proprietor: ROHM AND HAAS COMPANY, Philadelphia, Pennsylvania 19106-2399 (US)
(72) Inventor: Beltran, Jose Antonio, Medford New Jersey 08055 (US)
(74) Representative: Buckley, Guy Julian

(56) References cited:
- WO-A-95/33377
- US-A- 5 100 462

## Description

The present invention generally relates to methods to reverse ethylene inhibitor responses in plants and plant materials, and particularly relates to methods to reverse various ethylene responses including plant maturation and degradation in plants and plant materials previously exposed to cyclopropene derivatives and compositions thereof.

It is well known that ethylene can cause the premature death of plants or plant parts including, for example, flowers, leaves, fruits, and vegetables. Ethylene also promotes leaf yellowing and stunted growth as well as premature fruit, flower, and leaf drop. In the case of fruits, vegetables, and other produce, ethylene effects the ripening process. Such activities are understood to be achieved through interaction with a specific ethylene receptor in the plant or plant part. Many compounds other than ethylene interact with this receptor: some mimic the action of ethylene; others prevent ethylene from binding and thereby counteract its action. To address these ethylene-induced effects, very active and intense research presently concerns the investigation of ways to prevent or reduce the deleterious effects of ethylene on plants.

Methods of combating the ethylene response in plants with diazocyclopentadiene and derivatives thereof are disclosed in U.S. Patent No. 5,100,462 to Sisler et al. U.S. Patent No. 5,518,988 to Sisler et al. discloses the use of cyclopropene and its derivatives, including 1-methylcyclopropene, as effective blocking agents for ethylene binding. Such compounds, and compositions of the compounds, work quite well in inhibiting the effects of ethylene on plants and plant materials.

In most cases when a plant or a plant material is treated with an ethylene inhibitor the effects are not permanent. After a period of time the plant or plant material resumes its normal maturation processes such as, for example, ripening or degradation. In some cases, however, the maturation processes are permanently inhibited or the rate of maturation may be permanently reduced. Furthermore, when more than one member of a group of plants or plant materials are simultaneously treated with an ethylene inhibiting compound, they may not all resume the maturation process at the same time or at the same rate. This presents a problem when crates or containers of plants or plant materials are sold into commerce. The problem being that commercial establishments need to have crates or containers of plants and plant materials at approximately the same stage of maturation for sales to consumers. This problem is particularly acute when the type of plant or plant material is shipped in a partially ripened state but needs to ripen further prior to consumption. Such plants include, for example, avocados, peaches, pears, papaya, and bananas.

I have discovered a method to reverse the effect of ethylene inhibitors on plants and plant materials. The method comprises the steps of:
a) exposing a plant or plant material to ethylene;
b) reducing the level of carbon dioxide surrounding the plant or plant material; and
c) maintaining the plant or plant material at a temperature of 30°C or less.

The term "plant" is used in a generic sense herein, and includes, for example, woody-stemmed plants such as trees and shrubs; herbs; vegetables, fruits, nuts, agricultural crops, and ornamental plants. Plants to be treated by the methods described herein include, for example, whole plants and any portions thereof, such as field crops, potted plants, seeds, cut flowers (stems and flowers), and harvested fruits and vegetables.

For purposes of this invention, the plant or plant material, prior to treatment using the method of this invention, has been treated with an agent which inhibits the ethylene response in the plant or plant material. Preferably, the agent is a material that binds to the ethylene receptor in the plant or plant material. More preferably, the agent is a cyclopropene or cyclopropene derivative. Even more preferably, the agent is of the formula: 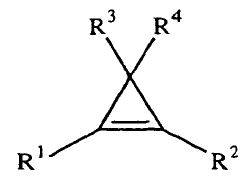 wherein:
1) each R¹, R², R³, and R⁴ is independently a group of the formula:

   -(L)ₙ-Z

   wherein:
   i) n is an integer from 0 to 12;
   ii) each L is independently selected from a member of the group D1, D2, E or J wherein:
      D1 is of the formula: 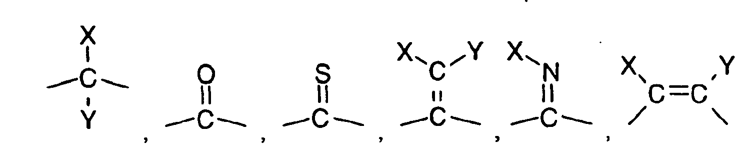 or 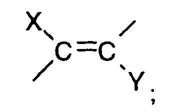
      D2 is of the formula: 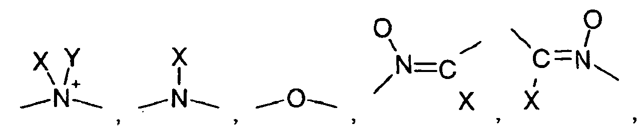 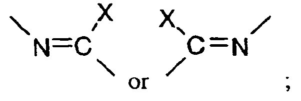
      E is of the formula: 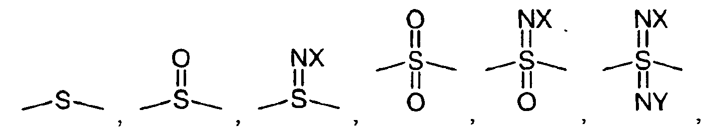 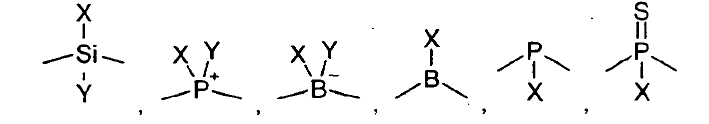 or 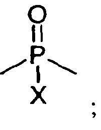 and
      J is of the formula: 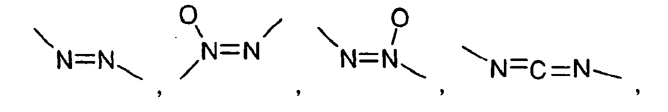 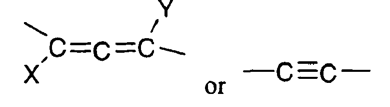
      wherein:
      A) each X and Y is independently a group of the formula:

         -(L)ₘ-Z;

         and
      B) m is an integer from 0 to 8; and
      C) no more than two E groups are adjacent to each other and no J groups are adjacent to each other;
   iii) each Z is independently selected from:
      A) hydrogen, halo, cyano, nitro, nitroso, azido, chlorate, bromate, iodate, isocyanato, isocyanido, isothiocyanato, pentafluorothio, or
      B) a group G, wherein G is an unsubstituted or substituted; unsaturated, partially saturated, or saturated; monocyclic, bicyclic, tricyclic, or fused; carbocyclic or heterocyclic ring system wherein;
         1) when the ring system contains a 3 or 4 membered heterocyclic ring, the heterocyclic ring contains 1 heteroatom;
         2) when the ring system contains a 5, or more, membered heterocyclic ring or a polycyclic heterocyclic ring, the heterocyclic or polycyclic heterocyclic ring contains from 1 to 4 heteroatoms;
         3) each heteroatom is independently selected from N, O, and S;
         4) the number of substituents is from 0 to 5 and each substituent is independently selected from X;
2) the total number of non-hydrogen atoms in each compound is 50 or less; and its enantiomers, stereoisomers, salts, and mixtures thereof.
Still more preferably, the agent is a cyclopropene of the formula: 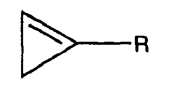 wherein R is hydrogen or a substituted or unsubstituted alkyl, alkenyl, alkynyl, cycloalkyl, cycloalkylalkyl, phenyl, or naphthyl group; wherein the substituents are each independently halogen, alkoxy, or substituted or unsubstituted phenoxy. Most preferably, the agent is 1-methylcyclopropene ("MCP").

The present invention can be employed to reverse a variety of different ethylene inhibition responses such as, for example, the ripening and/or senescence of flowers, fruits, and vegetables; abscission of foliage, flowers, and fruit; the shortening of life of ornamentals such as potted plants, cut flowers, shrubbery, seeds, and dormant seedlings; in some plants (for example, pea) the inhibition of growth, the stimulation of growth (for example, rice), auxin activity, inhibition of terminal growth, control of apical dominance, increase in branching, increase in tillering, changing the morphology of plants, modifying the susceptibility to plant pathogens such as fungi, changing bio-chemical compositions of plants (such as increasing leaf area relative to stem area), abortion or inhibition of flowering and seed development, lodging effects, stimulation of seed germination and breaking of dormancy, and hormone or epinasty effects.

Exposure of the plant or plant material to ethylene can be conducted using a variety of techniques. The only requirement is that the technique allow for the plant or plant material to be exposed to a measurable concentration of ethylene in the immediate vicinity of the plant. Preferably, the plant or plant material will be confined in a container such as, for example, packaging, boxes, crates, warehouses, controlled temperature and/or atmosphere rooms, shipping containers, truck bodies or trailers, and other types of storage facilities. The extent of reversal of the ethylene inhibition effect depends upon both the concentration of ethylene and the time of exposure. The exposure can be continuous or intermittent. Preferably, the concentration of ethylene is at least 10 parts per million ("ppm"), more preferably at least 25 ppm, even more preferably at least 50 ppm, and most preferably at least 90 ppm. A typical concentration is approximately 100 ppm.

As plants or plant materials mature, they respire and produce carbon dioxide. The method of this invention provides that the levels of carbon dioxide surrounding the plant or plant materials be reduced from that normally present. Preferably the concentration of carbon dioxide is less than 1%, by volume. Again, the extent of reversal of the ethylene inhibition effect depends upon both the concentration of carbon dioxide and the time of exposure.

During the time that the plant or plant material is being exposed to ethylene, the temperature should be maintained at, or less than, what would be considered by one skilled in the art to be the normal shelf storage temperature for the particular plant or plant material. The term "shelf storage temperature" means that temperature at which the plant or plant material is maintained in commerce for purposes of normal maturation, sale, or both. This temperature is typically above freezing and typically less than 30°C, preferably less than 25°C, more preferably from 20°C to 25°C, most preferably from 22°C to 24°C.

As noted above, the exposure to ethylene can be through use of a continuous flow of the gas or using intermittent cycles. When utilizing intermittent cycles, the plant or plant material may be confined in a container and then first exposed to ethylene followed by venting the container to maintain the appropriate carbon dioxide level. The carbon dioxide level can also be reduced through the use of scrubbers, filters, absorbents, or a combination thereof. A typical intermittent cycle would be one wherein the contained plant or plant material is exposed to ethylene for from six to twelve hours and then the container is vented for 0.5 hours. Such a cycle may be repeated as often as needed to achieve the desired state of ethylene inhibition reversal.

The method of this invention is continued until the plant or plant material reaches the desired maturation stage. In some cases this may be a stage of partial ripeness, in others, complete ripeness, that is, a "market ready" stage. The desired maturation stage will vary depending upon the type of plant or plant material and the point at which the plant or plant material is in the channels of commerce. That is, in some cases the plant or plant material will be ready for consumption. In other cases it may be some time before the plant or plant material will be consumed. In the latter case the desired maturation stage would be earlier than in the former case.

With some plants and plant materials, the relative humidity at which the plant or plant material is held can influence the rate of maturation. For example, avocados ripen more rapidly and uniformly at a relative humidity of from 90% to 95%. However, a disadvantage of high relative humidity is that disease such as, for example, anthracnose and stem end rot, can be more prevalent. As a result, in most cases, the relative humidity surrounding the plant and plant materials being treated using the method of this invention preferably is 80% or less, more preferably from 75% to 80%.

As used herein, all percentages are percent by weight and all parts are parts by weight, unless otherwise specified, and are inclusive and combinable. All ratios are by weight and all ratio ranges are inclusive and combinable. All ranges are inclusive and combinable.

### Examples

### Example 1:

A typical trial to evaluate the method of this invention is conducted as follows:

*Hass* variety avocados are harvested at their physiological maturity stage (21% or less dry matter and 12% oil content) according to the commercial practices for the location of harvest. Avocado boxes are processed according to standard commercial processes.

A set of these boxes is promptly exposed to 1-MCP at 200 ppb under cold storage conditions (approximately 6°C/43°F and 85-90% relative humidity ("RH")) during 12 hours. A second complete set of untreated avocado boxes are held under identical conditions to those of the fruit being treated, during the same period of time.

Respective sets of treated and untreated avocado boxes are then held under conditions closely simulating a *6-day* transportation in a refrigerated trailer (6°C/43°F and 90% RH) from Mexico to the USA/Canada, or a temporary storage plus transit for the domestic Chilean market. A second set of avocado boxes are held under conditions simulating a *20-day* shipment in a refrigerated sea container (6°C/43°F regular air and 90% RH) from Mexico to Europe/Japan or from Chile to the USA/Europe.

At the end of the 6 or 20-day simulated shipment/temporary cold storage, a complete set of avocado boxes are placed to ripe naturally under room conditions (22-24°C/72-75°F and 75-80% RH). Another set of boxes are exposed to ethylene treatment (100 ppm at 22-24°C/72-75°F, and 75-80% RH) to accelerate their ripening.

The avocado pulp is gradually warmed up (from near 6°C/43°F to approximately 22-24°C/72-75°F) as it is being exposed or not to ethylene. The fruit preconditioning and ethylene treatment is conducted simultaneously to shorten time to "market-ready" stage. The pulp temperature does not exceed 25°C/77°F.

The ethylene application is made having a continuous flow of this gas or using intermittent cycles of ethylene and venting as needed (for example, 6-12 hours of ethylene and ½ hour venting) trying to maintain the CO₂ concentration under a 1% level. CO₂ scrubbers, filters and/or absorbents may be used to reduce CO₂ build-up, in any of the two circumstances above.

The ethylene treatment is continued until the daily pulp softening evaluations of the fruit being treated reach a 'market-ready' firmness (near 5 lb). A similar monitoring of pulp softening is done on the fruit allowed to ripen without ethylene.

All the treated and untreated avocado samples are then transferred to shelf-life conditions (24°C/75°F and 55-60% RH), to conduct daily evaluations for determining the number of days for them to reach the "ready to eat stage" (1-3 lb), and the actual number of days that the fruit will stay in this ideal market-ripe stage.

The results of such an evaluation will demonstrate the effectiveness of the method of this invention to reverse the ethylene inhibition effect of 1-MCP.

### Example 2:

Avocados were treated as described above with 1-MCP, held in simulated cold storage for six days, and then treated with ethylene according to the method of this invention at a level of 100 ppm. Carbon dioxide level was maintained at less than 1%. The percent of avocados considered as ripened and the firmness of the avocados were evaluated on day 0 (1-MCP treatment), on the day of initiation of ethylene treatment (day 6+0) and 3 and 5 days thereafter (days 6+3 and 6+5). The results of these evaluations are found in Tables 1 and 2.

**Table 1**

| **Percent of crop considered ripe** | | | | | | |
|---|---|---|---|---|---|---|
| **Treatment.** | **1-MCP ppm** | **Ethylene ppm** | **Day 0** | **6+0** | **6+3** | **6+5** |
| 1 | 0 | 0 | 0.0 | 0.0 | 20.0 | 45.0 |
| 2 | 0 | 100 | 0.0 | 0.0 | 25.0 | 85.0 |
| 3 | 200 | 0 | 0.0 | 0.0 | 15.0 | 35.0 |
| 4 | 200 | 100 | 0.0 | 0.0 | 20.0 | 75.0 |

**Table 2**

| **Firmness (in Newtons ― Nw)** | | | | | | |
|---|---|---|---|---|---|---|
| **Treatment.** | **1-MCP ppm** | **Ethylene ppm** | **Day 0** | **6+0** | **6+3** | **6+5** |
| 1 | 0 | 0 | 248.5 | 248.5 | 177.1 | 117.1 |
| 2 | 0 | 100* | 248.5 | 248.5 | 85.5 | 55.9 |
| 3 | 200 | 0 | 248.5 | 248.5 | 231.9 | 152.9 |
| 4 | 200 | 100* | 248.5 | 248.5 | 115.7 | 68.6 |

These data demonstrate the effectiveness of the method of this invention to reverse the effect of the ethylene inhibitor 1-MCP.

## Claims

1. A method to reverse the effect of ethylene inhibitors in plants and plant materials comprising the steps of:
a) exposing a plant or plant material to ethylene;
b) reducing the level of carbon dioxide surrounding the plant or plant material; and
c) maintaining the plant or plant material at a temperature of 30°C or less.

2. The method of claim 1 further comprising the step of maintaining the relative humidity around the plant or plant material at 80% or less.

3. The method of claim 1 wherein the plant or plant material is intermittently exposed to ethylene.

4. The method of claim 1 wherein the plant or plant material is contained in a container.

5. The method of claim 4 wherein the carbon dioxide level in the container is maintained at 1 % or less by intermittently venting the container.

6. The method of claim 1 wherein the plant or plant material is selected from the group consisting of woody-stemmed plants; herbs; vegetables, fruits, agricultural crops, and ornamental plants.

7. The method of claim 1 wherein the plant or plant material is selected from avocados, peaches, pears, papaya, and bananas.

## Patentansprüche

1. Verfahren zur Umkehr der Wirkung von Ethyleninhibitoren in Pflanzen und Pflanzenmaterialien, umfassend die Schritte:
(a) das Aussetzen einer Pflanze oder eines Pflanzenmaterials Ethylen,
(b) das Verringern des Gehalts an Kohlendioxid, welches die Pflanze oder das Pflanzenmaterial umgibt, und
(c) das Halten der Pflanze oder des Pflanzenmaterials bei einer Temperatur von 30°C oder weniger.

2. Verfahren nach Anspruch 1, welches ferner den Schritt des Haltens der relativen Feuchtigkeit um die Pflanze oder das Pflanzenmaterial bei 80% oder weniger umfasst.

3. Verfahren nach Anspruch 1, wobei die Pflanze oder das Pflanzenmaterial zeitweilig bzw. mit Unterbrechungen Ethylen ausgesetzt wird.

4. Verfahren nach Anspruch 1, wobei die Pflanze oder das Pflanzenmaterial in einem Behälter enthalten ist.

5. Verfahren nach Anspruch 4, wobei der Kohlendioxidgehalt in dem Behälter bei 1 % oder weniger durch zeitweiliges Belüften des Behälters gehalten wird.

6. Verfahren nach Anspruch 1, wobei die Pflanze oder das Pflanzenmaterial aus der Gruppe, bestehend aus Pflanzen mit verholztem Stamm, Kräutern, Gemüsepflanzen, Früchten, landwirtschaftlichen Getreiden und Zierpflanzen, ausgewählt ist.

7. Verfahren nach Anspruch 1, wobei die Pflanze oder das Pflanzenmaterial aus Avocados, Pfirsichen, Birnen, Papaya und Bananen ausgewählt ist.

## Revendications

1. Procédé destiné à modifier l'effet d'inhibiteurs d'éthylène chez les plantes et les matières végétales comprenant les étapes consistant à :
a) exposer une plante ou une matière végétale à de l'éthylène ;
b) réduire le niveau de dioxyde de carbone entourant la plante ou la matière végétale : et
c) maintenir la plante ou la matière végétale à une température de 30° C ou moins.

2. Procédé selon la revendication 1, comprenant en outre l'étape consistant à maintenir une humidité relative autour de la plante ou de la matière végétale à 80 % ou moins.

3. Procédé selon la revendication 1, dans lequel la plante ou la matière végétale est exposée par intermittence à de l'éthylène.

4. Procédé selon la revendication 1, dans lequel la plante ou la matière végétale est contenue dans un conteneur.

5. "Procédé selon la revendication 4, dans lequel le niveau de dioxyde de carbone dans le conteneur est maintenu à 1 % ou moins en aérant par intermittence le conteneur.

6. Procédé selon la revendication 1, dans lequel la plante ou la matière végétale est choisie dans le groupe constitué des plantes ayant un tronc lignifié ; des herbes ; des légumes ; des fruits, des cultures agricoles et des plantes d'ornement.

7. Procédé selon la revendication 1, dans lequel la plante ou la matière végétale est choisie parmi les avocats, les pèches, les poires, la papaye et les bananes.
